# EUROPÄISCHE PATENTANMELDUNG

(11) **EP 0 765 728 A2**
(43) Veröffentlichungstag der Anmeldung: **02.04.1997**
(21) Anmeldenummer: 96113216.4
(22) Anmeldetag: 17.08.1996
(51) Int. Cl.: B29C 45/27, B29C 45/28

(54) **Düsenkörper für eine Spritzgiessdüse**

(30) Priorität: 26.09.1995 DE 19535717
(71) Anmelder: Krupp Kunststofftechnik GmbH, 45143 Essen (DE)
(72) Erfinder: Blank, Michael, 42113 Wuppertal (DE); Schramm, Klaus, Dr.-Ing., 45131 Essen (DE)

(57) **Zusammenfassung**

Um einen Düsenkörper für eine Spritzgießdüse für ein Mehrkavitäten-Werkzeug zum Herstellen von Kunststofformkörpern mit einem sich an den Schmelzverteilerblock anschließenden Düsenkopf und einen schlankeren an die Kavität angrenzenden Düsenhals mit eingesetztem Düsenmundstück, wobei der Düsenkörper einen Schmelzekanal und spiralförmige Heizelemente im schlanken an die Kavität angrenzenden Düsenhals eingegossen sind, zu schaffen, der weniger aufwendig aufgebaut und damit leichter herstellbar ist und eine homogene Wärmeverteilung im Düsenkörper insgesamt bis hin zum Kavitätenanschnitt erlaubt, ist der Düsenkörper (1) im wesentlichen ein homogener Körper aus einem Gußmaterial, wobei die Heizelemente (6) auf einem mit diesen umwickelten eingegossenen Stahlstab (8) angeordnet sind.

## Beschreibung

Die Erfindung betrifft einen Düsenkörper nach dem Oberbegriff des Anspruchs 1.

Bei den bekannten hochkavitätigen Spritzgießwerkzeugen für PET-Flaschenvorformlinge kommen Schmelzeverteilersysteme und Spritzgießdüsen mit Düsenkörpern zum Einsatz, die nicht allen Anforderungen der PET-Schmelzeführung gerecht werden.

Mit diesen Schmelzeverteilersystemen werden 16-, 32-, 48-, 72- und 96-Kavitäten-Werkzeuge sowohl in Nadellos- als auch in Nadelverschlußausführung betrieben. Allen Bauformen der PET-Schmelzeverteilersysteme ist zu eigen, daß die Wärmeausdehnung der Verteilerblöcke durch "Gleiten" auf der oberen axialen Stirnseite der Spritzgießdüsen (die zentriert in einer kalten Hotrunnerplatte stehen) aufgenommen wird.

Die für die Verarbeitung von Kunststoff-Schmelzen notwendige gleichmäßige Temperaturführung der Schmelzekanäle bei gleichzeitiger Vermeidung von Toträumen und Bildung von "stehenden" Wirbeln in diesen Toträumen ist mit der bisherigen Bauart, die z.B. durch die EP 0 163 083 B1 dokumentiert wird, nicht zu erreichen.

Aus der EP 0 163 083 B1 sind derartige Spritzgießdüsen bekannt, wobei der Düsenkörper jeweils aus einer Düsenhülse mit Düsenkopf und eingesetztem Führungsstück für am Düsenkopf eingeführte Düsennadel und Schmelzekanal besteht. Der Düsenkörper besteht aus mehreren separat hergestellten Einzelteilen. Außerdem sind im Düsenkopf Heizelemente eingegossen, was bedeutet, daß nur dieser aktiv beheizt wird und sich ein Temperaturabfall vom Düsenkopf nach unten zur Düsenspitze einstellt, da der schlanke, lange Teil des Düsenkörpers in Richtung Kavität nur über Wärmeleitung indirekt beheizt wird, so daß der Schmelzefluß gestört werden kann.

Ferner ist aus der DE 43 12 153 A1 ein Düsenkörper bekannt, der ebenso aus mehreren separat hergestellten Einzelteilen besteht.

Von daher liegt der Erfindung die Aufgabe zugrunde, einen Düsenkörper der eingangs genannten Art zu schaffen, der weniger aufwendig aufgebaut und damit leichter herstellbar ist und eine homogene Wärmeverteilung im Düsenkörper insgesamt bis hin zum Kavitätenanschnitt erlaubt.

Nach der Erfindung wird die Aufgabe durch die in den kennzeichnenden Teilen der Ansprüche 1 und 2 angegebenen Merkmale gelöst.

Vorteilhafte und zweckmäßige Ausführungsformen sind in den Ansprüchen 2 bis 9 angegeben.

Die Vorteile des Düsenkörpers nach der Erfindung sind insbesondere darin zu sehen, daß der eigentliche Düsen-Grundkörper aus nur einem Werkstück besteht und die besondere Anordnung der Heizelemente im schlanken Teil des Düsenkörpers eine gleichmäßige Beheizung (Temperaturhomogenität) des Schmelzekanals bis zum Kavitätenanschnitt gewährleistet.

Durch entsprechende Materialkombination werden dort, wo hohe mechanische Beanspruchung oder Verschleißbeanspruchung vorliegt, Stähle und dort, wo es auf Temperaturhomogenität ankommt, NE-Metalle (vorzugsweise Kupferlegierungen) mit einem hohen Wärmeleitwert eingesetzt.

Dadurch, daß die Heizelemente voll umgossen sind, findet ein inniger Wärmefluß zwischen Heizkörper und Gußmaterial statt. Weiterhin stellt sich eine hohe Temperaturhomogenität im Düsenkörper ein, und die Wärmeverluste gegenüber einem außen auf der Düse gesetzten Rohrheizkörper werden erheblich vermindert. Hierdurch wird die elektrische Heizleistung deutlich reduziert.

Mittels der eingegossenen Temperaturfühleraufnahme in Rohrform können optimale Regelpunkte nahe dem Anschnitt gesetzt werden, und die Wartung wird durch Zugänglichkeit der Temperaturfühler innerhalb der Trennebene sehr vereinfacht.

Anhand der schematischen Zeichnung werden im folgenden Ausführungsbeispiele des Erfindungsgegenstandes näher erläutert.

Es zeigt
- Fig.1: eine Ausführungsform im Längsschnitt,
- Fig.2: eine andere Ausführungsform im Längsschnitt,
- Fig.3: eine weitere Ausführungsform im Längsschnitt,
- Fig.4: eine weitere Ausführungsform im Längsschnitt,
- Fig.5: eine weitere Ausführungsform im Längsschnitt,
- Fig.6: die Ausführungsform nach Fig. 5 im Längsschnitt in erweiterter Form,
- Fig.7: die Ausführungsform nach Fig. 5 im Längsschnitt in erweiterter Form,
- Fig.8: eine Grundform im Längsschnitt zu Fig. 3,
- Fig.9: die Ausführungsform nach Fig. 8 in erweiterter Form,
- Fig.10: eine Grundform im Längsschnitt zu Fig. 4,
- Fig.11: die Ausführungsform nach Fig. 5 in erweiterter Form,
- Fig.12: eine weitere Ausführungsform im Längsschnitt,
- Fig.13: die Ausführungsform nach Fig. 11 in erweiterter Form,
- Fig.14: einen Düsenkörper im eingebauten Zustand,
- Fig.15: einen Ausschnitt aus Fig. 14.

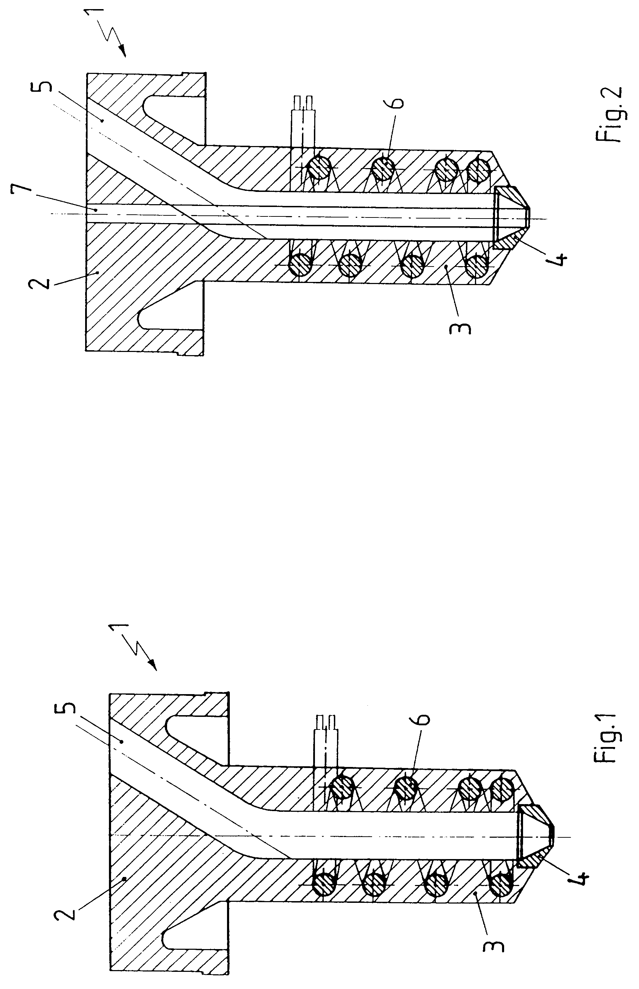

Wie aus den Fig. 1 bis 13 hervorgeht, besteht der Düsenkörper 1 für eine Spritzgießdüse für ein nicht dargestelltes Mehrkavitäten-Werkzeug zum Herstellen von PET-Flaschenvorformlingen aus einem sich an einen Schmelzeverteilerblock anschließenden Düsenkopf 2 und einem schlankeren an eine Kavität angrenzenden Düsenhals 3 mit eingesetztem Düsenmundstück 4.

Der Düsenkörper 1 ist dabei ein homogener Körper aus einem Gußmaterial, welches ein NE-Metall, wie vorzugsweise z.B. G-CuZn34A12 ist, und weist einen Schmelzekanal 5 auf. In den Düsenkörper 1 sind im schlanken an die Kavität angrenzenden Düsenhals 3 spiralförmige Heizelemente 6 eingegossen.

Die Heizelemente 6 bestehen z.B. aus dünnwandigen, hochtemperaturbeständigen Röhrchen aus Chrom-Nickel-Stahl (z.B. Werkstoff 1.4306, 1.4541 oder 2.4816 Inconel), in denen die Heizadern eingesetzt sind und mittels Mineralpulver, z.B. reiner Magnesiumoxid gegeneinander isoliert werden.

In dieser Werkstoffkombination ertragen die Heizelemente 6 Betriebstemperaturen bis 1050 °C und Drücke bis 500 bar.

Das Düsenmundstück 4 bildet den dichtenden Übergang zur Schmelzeeintrittsöffnung zum Kavitätenhohlraum.

In diesem Bereich ist für eine gute Funktion der Spritzgießdüse eine "harte" thermische Trennung warm/kalt wichtig, daher kommt eine Titanlegierung zum Einsatz. Dies wird durch den außerordentlich niedrigen Wärmeleitwert von 7,1 w/m*k erreicht.

In der Ausführung nach Fig. 1 ist ein Düsenkörper 1 in Nadellosausführung mit anschließend mechanisch hergestelltem Schmelzekanal 5 dargestellt, wogegen die Fig. 2 ebenfalls einen Düsenkörper 1 wie nach Fig. 1, aber in Nadelverschlußausführung mit einer Bohrung 7 für eine nicht dargestellte Verschlußnadel zeigt.

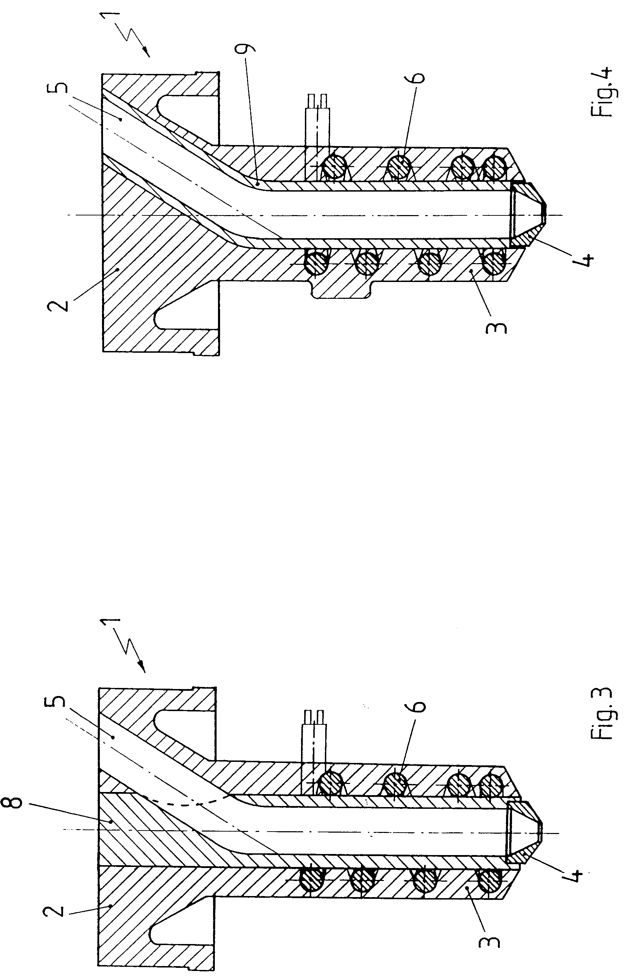

Die Fig. 3 zeigt einen Düsenkörper 1 mit zentrisch eingegossenem Stahlstab 8 mit mechanisch hergestelltem Schmelzekanal 5 in Nadellosausführung, wogegen der in Fig. 4 dargestellte Düsenkörper 1 ebenfalls in Nadellosausführung einen Schmelzekanal 5 aufweist, der aus einem eingegossenen Stahlrohr 9 besteht.

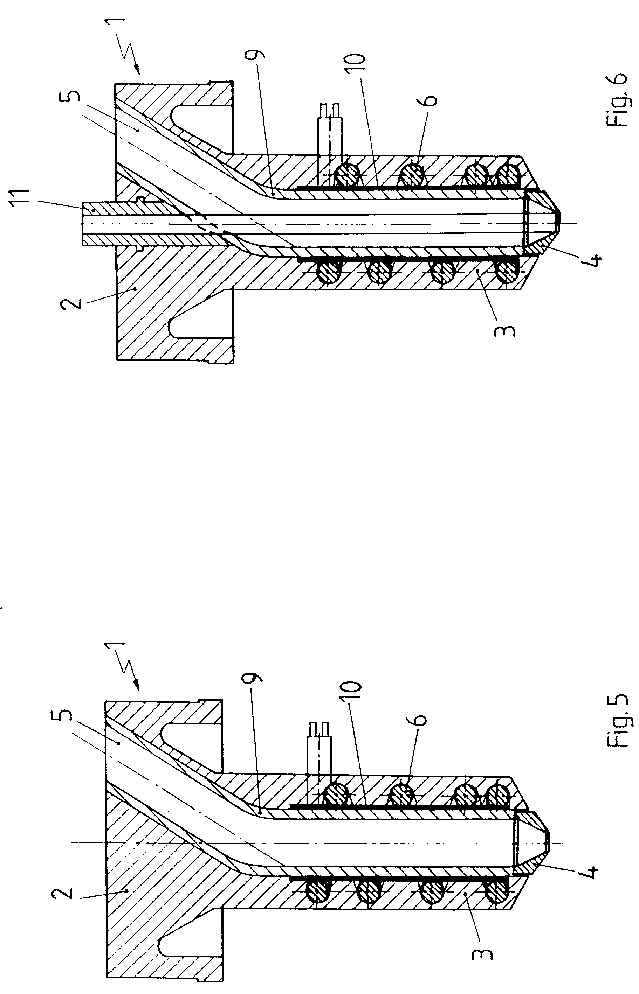

Der Düsenkörper 1 in Nadellosausführung nach Fig. 5 weist ebenfalls ein eingegossenes Stahlrohr 9 für den Schmelzekanal 5 auf, wobei zwischen dem Stahlrohr 9 und den Heizelementen 6 eine Reinkupferrohrummantelung 10 zur Temperaturhomogenisierung vorgesehen ist.

In der Fig. 6 ist die Ausbildung nach Fig. 5 mit Stahlrohr 9 für den Schmelzekanal 5 und Reinkupferrohrummantelung 10 in Nadelverschlußausführung dargestellt, wobei der Führungskörper 11 für eine Verschlußnadel, die aus gehärtetem Stahl besteht, mit eingegossen ist.

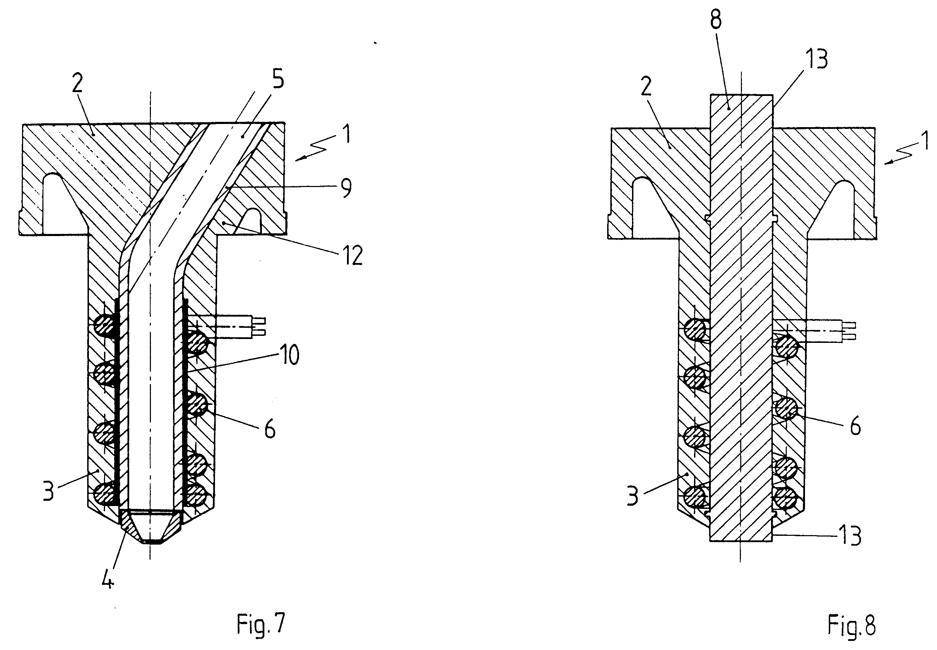

Der Düsenkörper 1 in der Fig. 7 zeigt ebenfalls eine Ausführung mit eingegossenem Stahlrohr 9 für den Schmelzekanal 5 und Reinkupferrohrummantelung 10 wie die Fig. 5, allerdings mit einer Materialanhäufung 12 im Düsenkopf 2, wodurch im Winkelbereich des den Schmelzekanal 5 bildenden Stahlrohres 9 eine Temperaturhomogenitätsverbesserung erreicht wird.

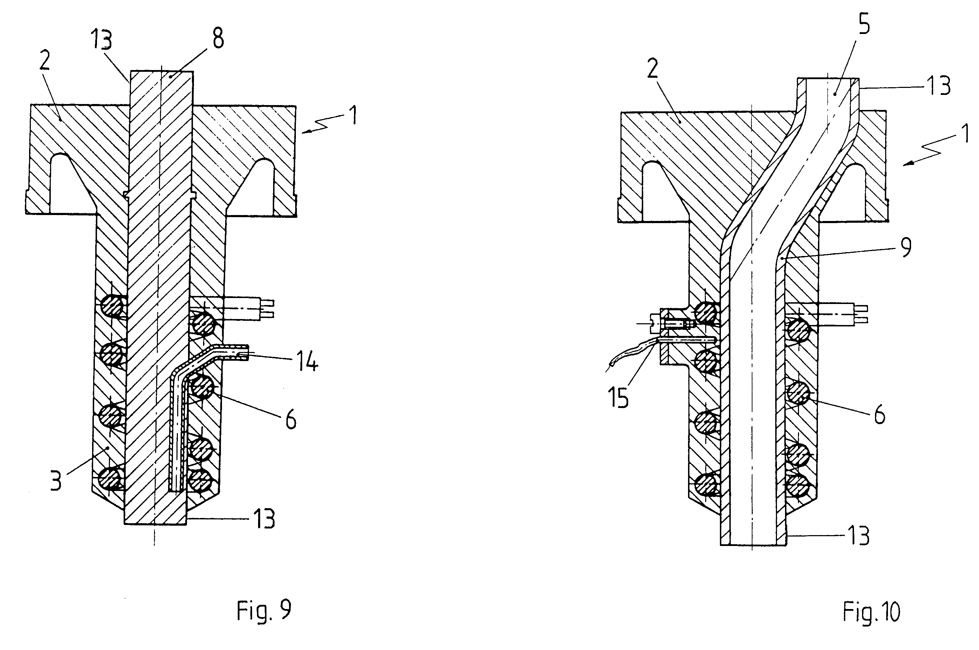

Die Fig. 8 zeigt einen unbearbeiteten Gußrohling für einen Düsenkörper 1 gemaß Fig. 3 mit eingegossenem Stahlstab 8, wobei der Stahlstab 8 Zentrierabschnitte 13 zur Zentrierung des Stahlstabes 8 in der nicht dargestellten Kokille aufweist. Nach Fig. 9 weist dieser Düsenkörper 1 nach Fig. 8 mit Stahlstab 8 und Zentrierabschnitten 13 zusätzlich eine eingegossene Rohraufnahme 14 für ein Thermoelement auf. Diese Rohraufnahme 14 besteht vorzugsweise aus einem nahtlosen Rohr aus warmfesten, nichtrostenden Stählen nach DIN 17440, z.B. 1.4057.

In der Fig. 10 ist ein Gußrohling für den Düsenkörper 1 dargestellt mit einem eingegossenen Stahlrohr 9 für den Schmelzekanal 5 mit Zentrierabschnitten 13, wobei ein Thermofühler 15 vorgesehen ist, mit dem die Regeltemperatur direkt am Stahlrohr 9 des Schmelzekanals 5 erfaßt wird.

Für das direkte Eingießen in den Düsenkörper 1, d.h. ohne Schutzhülle eignen sich Mantelthermoelemente, deren thermische und mechanische Belastbarkeit je nach Werkstoffkombination noch die Werte der Heizelemente 6 übertrifft.

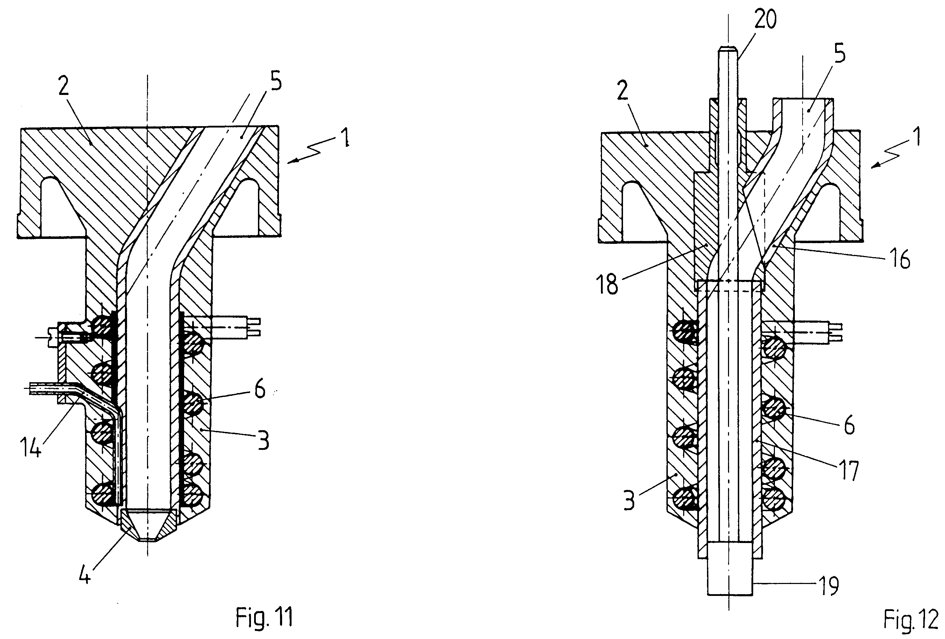

Die Fig. 11 zeigt die Ausführungsform des Düsenkörpers 1 mit eingegossenem Stahlrohr 9 für den Schmelzekanal 5 und zusätzlicher Reinkupferrohrummantelung 10 gemäß Fig. 5, wobei eine Rohraufnahme 14 für ein Thermoelement mit eingegossen ist.

Die Ausführungsform eines Gußrohlings für einen Düsenkörper 1 in Nadelverschlußausführung gemäß Fig. 12 zeigt zwei eingegossene Stahlrohre 16, 17 für den Schmelzekanal 5 sowie einen damit zusammen eingegossenen Führungskörper 18 für eine Verschlußnadel, wobei der Führungskörper 18 eine Zentrierung 20 und das Stahlrohr 17 eine Zentrierung 19 für die Kokille aufweisen.

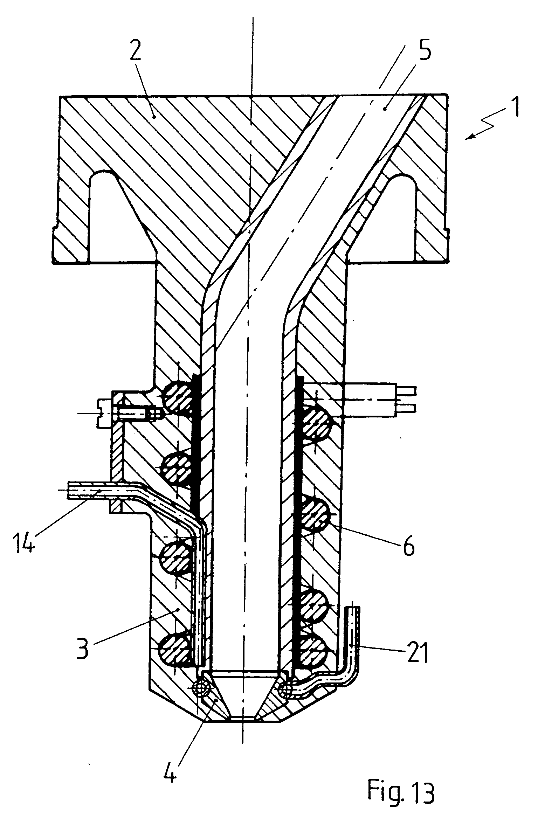

Nach der Fig. 13 ist um das Düsenmundstück 4 ein Kühlröhrchen 21 für das Durchfließen mit einem Kühlmedium eingegossen. Dabei wird der Düsenkörper 1 im Bereich des Düsenmundstücks 4 nach Einspritzende bis zum Beginn der Entformung des Spritzlings im Kühlröhrchen 21 von dem Kühlmedium durchströmt, wodurch das Versiegeln des Anschnittbereiches verkürzt wird.

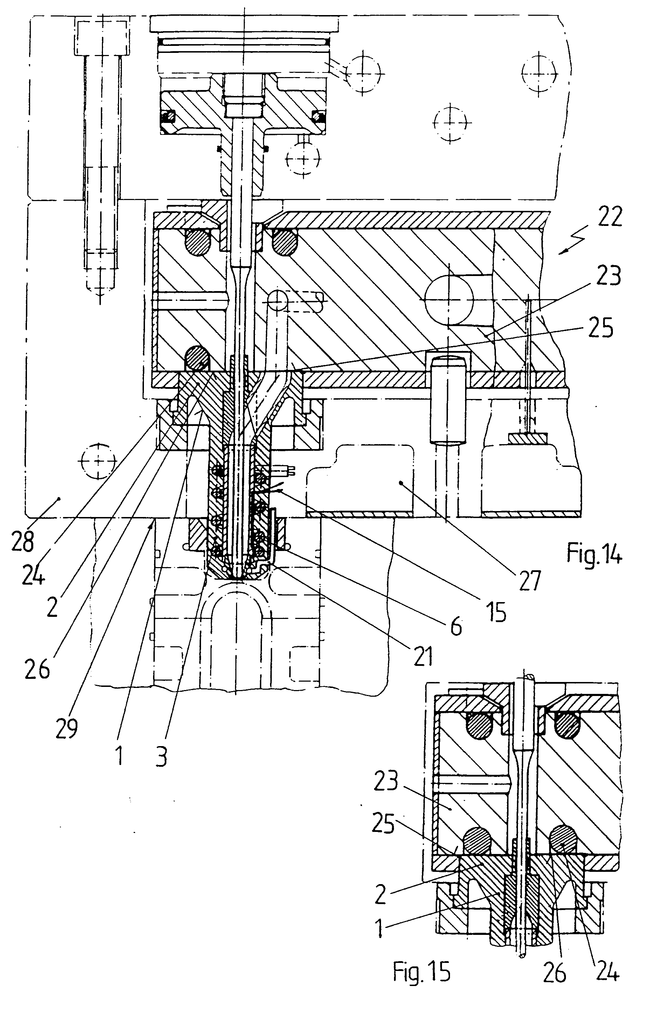

In den Fig. 14 und 15 ist der Düsenkörper 1 einer Spritzgießdüse in einem Schmelzverteilersystem 22 eines Mehrkavitäten-Werkzeuges im eingebauten Zustand dargestellt. Der Düsenkörper 1 liegt dabei mit der Oberseite 25 seines Düsenkopfes 2 an der Unterseite 26 eines Schmelzverteilerblockes 23 innig unter Kraftschluß an. Dabei wird der Düsenkopf 2 über im Schmelzverteilerblock 23 unterseitig eingebettete Heizelemente 24 beheizt. Im Zusammenwirken dieser Heizelemente 24 im Schmelzverteilerblock 23 mit den Heizelementen 6 im Düsenhals 3 des Düsenkörpers 1 wird im Düsenkörper 1 somit eine homogene Temperaturverteilung über die gesamte Länge des Düsenkörpers erzielt.

Wie der Fig. 14 auch zu entnehmen ist, sind die Anschlüsse für die Heizelemente 6, Thermofühler 15 sowie das Kühlrohr 21 in dem nutenförmigen Freiraum 27 in der Aufnahmeplatte 28 für den Schmelzverteilerblock 23 frei zugänglich nach Trennung des Mehrkavitäten-Werkzeuges in der Ebene 29.

### Bezugszeichenliste

- 1.: Düsenkörper
- 2.: Düsenkopf
- 3.: Düsenhals
- 4.: Düsenmundstück
- 5.: Schmelzekanal
- 6.: Heizelemente
- 7.: Bohrung
- 8.: Stahlstab
- 9.: Stahlrohr
- 10.: Reinkupferrohrummantelung
- 11.: Führungskörper
- 12.: Materialanhäufung
- 13.: Zentrierabschnitte
- 14.: Rohraufnahme
- 15.: Thermofühler
- 16.: Stahlrohr
- 17.: Stahlrohr
- 18.: Führungskörper
- 19.: Zentrierung
- 20.: Zentrierung
- 21.: Kühlrohr
- 22.: Schmelzverteilersystem
- 23.: Schmelzverteilerblock
- 24.: Heizelement
- 25.: Oberseite
- 26.: Unterseite
- 27.: Freiraum
- 28.: Aufnahmeplatte
- 29.: Ebene

## Patentansprüche

1. Düsenkörper für eine Spritzgießdüse für ein Mehrkavitäten-Werkzeug zum Herstellen von Kunststofformkörpern mit einem sich an den Schmelzeverteilerblock anschließenden Düsenkopf und einen schlankeren an die Kavität angrenzenden Düsenhals mit eingesetztem Düsenmundstück, wobei der Düsenkörper einen Schmelzekanal aufweist und spiralförmige Heizelemente (6) im schlanken an die Kavität angrenzenden Düsenhals (3) eingegossen sind, **dadurch gekennzeichnet,** daß der Düsenkörper (1) im wesentlichen ein homogener Körper aus einem Gußmaterial ist, wobei die Heizelemente (6) auf einem mit diesen umwickelten mittig eingegossenen Stahlstab (8) angeordnet sind.

2. Düsenkörper für eine Spritzgießdüse für ein Mehrkavitäten-Werkzeug zum Herstellen von Kunststofformkörpern mit einem sich an den Schmelzeverteilerblock anschließenden Düsenkopf und einen schlankeren an die Kavität angrenzenden Düsenhals mit eingesetztem Düsenmundstück, wobei der Düsenkörper einen Schmelzekanal aufweist und spiralförmige Heizelemente (6) im schlanken an die Kavität angrenzenden Düsenhals (3) eingegossen sind, **dadurch gekennzeichnet,** daß der Düsenkörper (1) im wesentlichen ein homogener Körper aus einem Gußmaterial ist, wobei die Heizelemente (6) auf einem mit diesen umwickelten mit eingegossenen Stahlrohr (9) angeordnet sind.

3. Düsenkörper nach Anspruch 1 oder 2, **dadurch gekennzeichnet,** daß die Heizelemente (6) mit einem integrierten Thermofühler (15) versehen sind.

4. Düsenkörper nach Anspruch 2, **dadurch gekennzeichnet,** daß auf dem Stahlrohr (9) eine Reinkupferrohrummantelung (10) angeordnet ist, um die die Heizelemente (6) gewickelt und mit eingegossen sind.

5. Düsenkörper nach einem oder mehreren der Ansprüche 1 bis 4, **dadurch gekennzeichnet,** daß in den Düsenkörper (1) zusätzlich ein Führungskörper (11, 18) für eine Verschlußnadel mit eingegossen ist.

6. Düsenkörper nach einem oder mehreren der Ansprüche 1 bis 5, **dadurch gekennzeichnet,** daß der Führungskörper (18) für die Verschlußnadel eine Halbnase in Längsachsrichtung aufweist, die das Umspülen der Verschlußnadel durch den Schmelzestrom erst nach deutlicher Orientierung des Schmelzestroms in Längsrichtung zuläßt.

7. Düsenkörper nach einem oder mehreren der Ansprüche 1 bis 6, **dadurch gekennzeichnet,** daß die Führungskörper (11, 18) für die Verschlußnadel aus hochwarmfesten anlassbeständigen Ferro-Titanit-Werkzeugstahl bestehen.

8. Düsenkörper nach einem oder mehreren der Ansprüche 1 bis 7, **dadurch gekennzeichnet**, daß die Führungskörper (11, 18) für die Verschlußnadel aus einer hochverschleißfesten Keramiklegierung bestehen und in ihrer Innenkontur annähernd fertig bearbeitet sind.

9. Düsenkörper nach einem oder mehreren der Ansprüche 1 bis 7, **dadurch gekennzeichnet**, daß die Stahlrohre (9, 16, 17) und der metallische Führungskörper (11, 18) für die Verschlußnadel vor dem Eingießen miteinander verlötet werden.
